(19) Europäisches Patentamt
European Patent Office
Office européen des brevets

(11) EP 4 349 905 A1

(12) EUROPEAN PATENT APPLICATION
published in accordance with Art. 153(4) EPC

(43) Date of publication:
**10.04.2024 Bulletin 2024/15**

(21) Application number: **22811040.9**

(22) Date of filing: **31.03.2022**

(51) International Patent Classification (IPC):
***C08L 9/06*** *(2006.01)* ***B60C 1/00*** *(2006.01)*
***C08C 19/25*** *(2006.01)* ***C08K 3/013*** *(2018.01)*
***C08K 3/04*** *(2006.01)* ***C08K 3/36*** *(2006.01)*
***C08L 15/00*** *(2006.01)* ***C08L 101/00*** *(2006.01)*

(52) Cooperative Patent Classification (CPC):
**B60C 1/00; C08C 19/25; C08K 3/013; C08K 3/04; C08K 3/36; C08L 9/06; C08L 15/00; C08L 101/00;**
Y02T 10/86

(86) International application number:
**PCT/JP2022/016939**

(87) International publication number:
**WO 2022/249766 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.05.2021 JP 2021090702**

(71) Applicant: **BRIDGESTONE CORPORATION**
**Chuo-ku**
**Tokyo 104-8340 (JP)**

(72) Inventor: **OSHIMA Naoya**
**Tokyo 104-8340 (JP)**

(74) Representative: **Marks & Clerk LLP**
**15 Fetter Lane**
**London EC4A 1BW (GB)**

# (54) TIRE RUBBER COMPOSITION, TREAD RUBBER, AND TIRE

(57) Provided is a rubber composition for tire capable of highly balancing wet grip performance with fuel efficiency and wear resistance in a tire. The present disclosure provides a rubber composition containing a rubber component and a filler containing at least silica, where the rubber component contains a styrene-butadiene rubber (A) having a glass transition temperature of -50 °C or lower, which is obtained by modifying a compound represented by the formula (1) with a modifying agent, and an unmodified styrene-butadiene rubber (B) whose glass transition temperature is 30 °C or more higher than that of the styrene-butadiene rubber (A).

EP 4 349 905 A1

## Description

TECHNICAL FIELD

This disclosure relates to a rubber composition for tire, a tread rubber, and a tire.

BACKGROUND

Various studies have conventionally been made to improve braking performance on a wet road surface (hereinafter, abbreviated as "wet grip performance") from the viewpoint of improving vehicle safety. For example, WO/2015/079703 (PTL 1) describes that a rubber composition, which is obtained by blending a thermoplastic resin and a filler containing silica with a rubber component containing 70 % by mass or more of natural rubber, is applied to a tread rubber of a tire to improve the braking performance of the tire on both a dry road surface and a wet road surface.

On the other hand, in response to global moves to regulate carbon dioxide emissions with the increased interest in environmental problems in recent years, demand to improve the fuel efficiency of automobiles is growing. To meet such demand, improvement in fuel efficiency (reduction in rolling resistance) is required in terms of tire performance.

CITATION LIST

Patent Literature

PTL 1: WO/2015/079703

SUMMARY

(Technical Problem)

However, we have studied the technique described in PTL 1 and found that, although the wet grip performance of a tire can be improved, there is room for improvement in fuel efficiency and wear resistance.

It could thus be helpful to provide a rubber composition for tire which can solve the problem of the prior art and can highly balance wet grip performance with fuel efficiency and wear resistance in a tire, as well as a tread rubber containing the rubber composition.

It also could be helpful to provide a tire in which wet grip performance is highly balanced with fuel efficiency and wear resistance.

(Solution to Problem)

We thus provide the following.

A rubber composition for tire of the present disclosure is a rubber composition containing a rubber component and a filler containing at least silica, where

the rubber component contains a styrene-butadiene rubber (A) having a glass transition temperature of -50 °C or lower, which is obtained by modifying a compound represented by the formula (1) with a modifying agent, and an unmodified styrene-butadiene rubber (B) whose glass transition temperature is 30 °C or more higher than that of the styrene-butadiene rubber (A).

[Chem. 1]

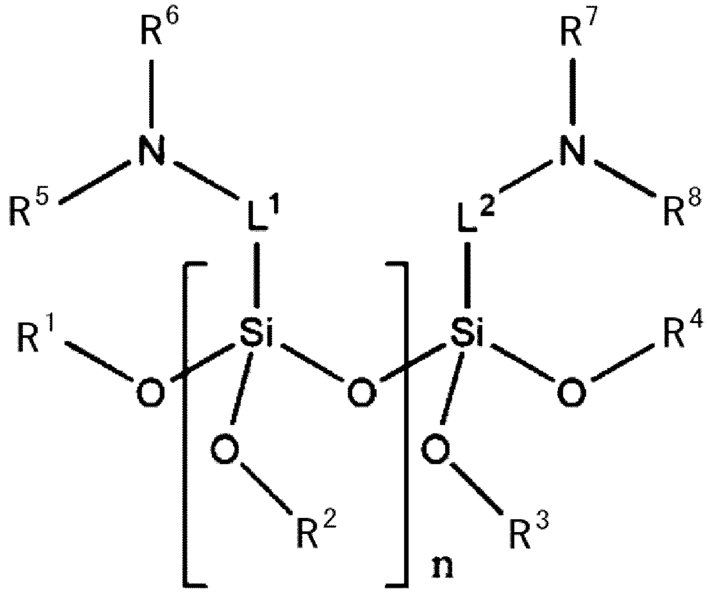

(In the formula, $R^1$ to $R^8$ are each independently an alkyl group having 1 to 20 carbon atoms; $L^1$ and $L^2$ are each independently an alkylene group having 1 to 20 carbon atoms; and n is an integer of 2 to 4.)

By applying the rubber composition for tire of the present disclosure to a tire, it is possible to highly balance wet grip performance with fuel efficiency and wear resistance in the tire.

In a preferred embodiment of the rubber composition for tire of the present disclosure, the content ratio of the styrene-butadiene rubber (A) in the rubber component is 15 % by mass to 60 % by mass. In this case, it is possible to achieve both fuel efficiency and wear resistance, and wet grip performance at a higher level in a tire using the rubber composition.

In another preferred embodiment of the rubber composition for tire of the present disclosure, a resin is further contained in an amount of 1 part by mass to 50 parts by mass with respect to 100 parts by mass of the rubber component. In this case, it is possible to further improve wet grip performance in a tire using the rubber composition.

In another preferred embodiment of the rubber composition for tire of the present disclosure, the filler further contains carbon black, and the content ratio of silica in the total amount of the silica and the carbon black is 50 % by mass or more and less than 100 % by mass. In this case, it is possible to further improve fuel efficiency and wear resistance in a tire using the rubber composition.

In another preferred embodiment of the rubber composition for tire of the present disclosure, the modifying agent is any one of the formulas (1-1) to (1-5).

[Chem. 2]

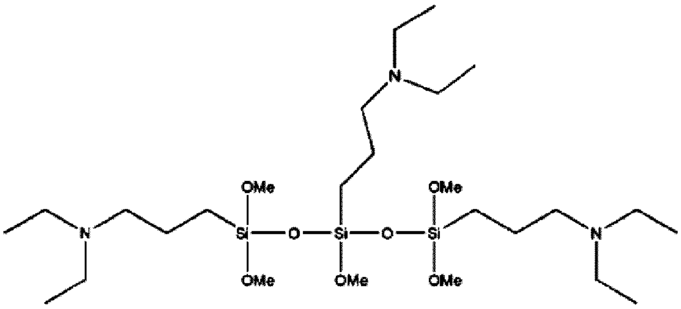

· · · · · (1-1)

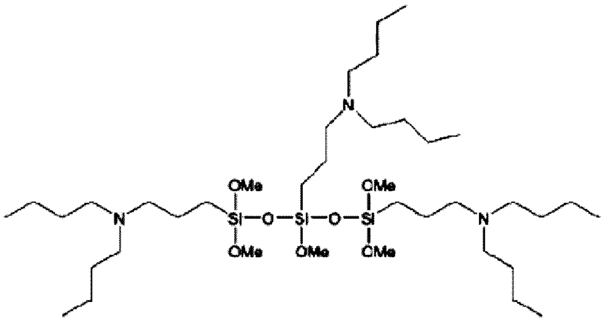

· · · · · (1-2)

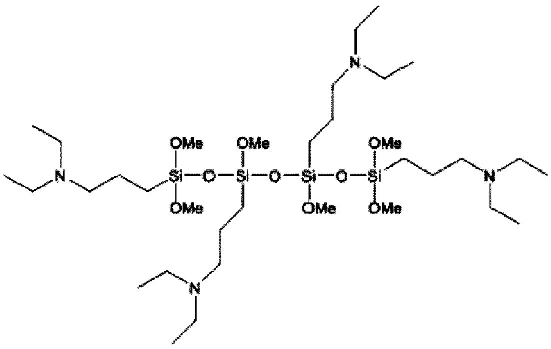

· · · · · (1-3)

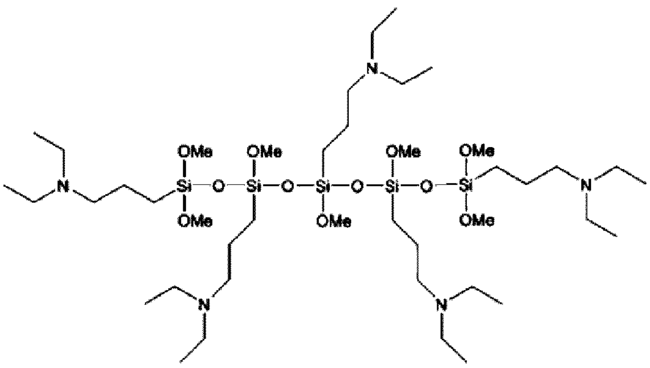

· · · · · (1-4)

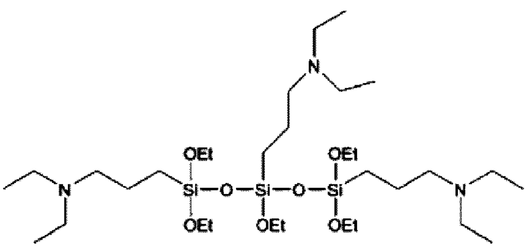

· · · · · (1-5)

In this case, it is possible to achieve both wet grip performance, and fuel efficiency and wear resistance at a higher level in a tire using the rubber composition.

In another preferred embodiment of the rubber composition for tire of the present disclosure, the styrene-butadiene rubber (A) is further modified with a modifying agent containing a compound represented by the formula (2).

[Chem. 3]

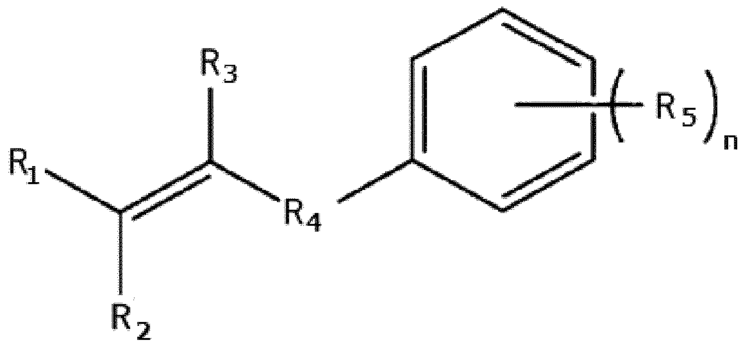

· · · · (2)

(In the formula (2), $R_1$ to $R_3$ are each independently hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms, a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, $R_4$ is a single bond; an alkylene group having 1 to 20 carbon atoms substituted or unsubstituted with a substituent; a cycloalkylene group having 5 to 20 carbon atoms substituted or unsubstituted with a substituent; or an arylene group having 5 to 20 carbon atoms substituted or unsubstituted with a substituent, where the substituent is an alkyl group having 1 to 10 carbon atoms, a cycloalkyl group having 5 to 10 carbon atoms, or an aryl group having 6 to 20 carbon atoms, and $R_5$ is an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms; or a functional group represented by the following chemical formula (2a) or chemical formula (2b), where n is an integer of 1 to 5, at least one $R_5$ is a functional group represented by the following chemical formula (2a) or chemical formula (2b), and when n is an integer of 2 to 5, a plurality of $R_5$s may be the same or different from each other.

[Chem. 4]

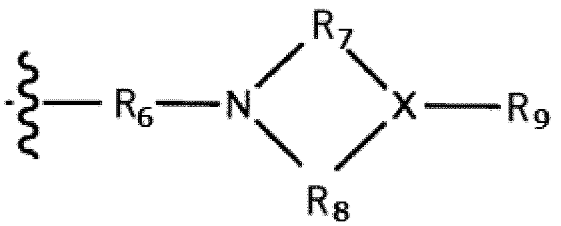

· · · · (2a)

In the formula (2a), $R_6$ is an alkylene group having 1 to 20 carbon atoms substituted or unsubstituted with a substituent; a cycloalkylene group having 5 to 20 carbon atoms substituted or unsubstituted with a substituent; or an arylene group having 6 to 20 carbon atoms substituted or unsubstituted with a substituent, where the substituent is an alkyl group having 1 to 10 carbon atoms, a cycloalkyl group having 5 to 10 carbon atoms, or an aryl group having 6 to 20 carbon atoms, $R_7$ and $R_8$ are each independently an alkyl group having 1 to 10 carbon atoms, a cycloalkyl group having 5 to 10 carbon atoms, or an alkylene group having 1 to 20 carbon atoms substituted or unsubstituted with an aryl group having 6 to 20 carbon atoms, $R_9$ is hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, X is a N, O or S atom, and when X is O or S, there is no R9.

[Chem. 5]

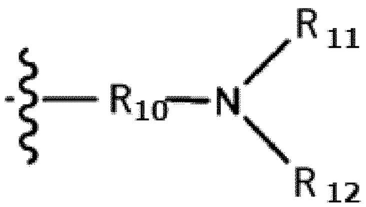

· · · · (2b)

In the formula (2b), $R_{10}$ is an alkylene group having 1 to 20 carbon atoms substituted or unsubstituted with a substituent; a cycloalkylene group having 5 to 20 carbon atoms substituted or unsubstituted with a substituent; or an arylene group having 6 to 20 carbon atoms substituted or unsubstituted with a substituent, where the substituent is an alkyl group having 1 to 10 carbon atoms, a cycloalkyl group having 5 to 10 carbon atoms, or an aryl group having 6 to 20 carbon atoms, and $R_{11}$ and $R_{12}$ are each independently an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.)

In this case, it is possible to further improve fuel efficiency and wear resistance in a tire using the rubber composition.

Further, a tread rubber of the present disclosure contains the rubber composition for tire of the present disclosure described above. By applying the tread rubber of the present disclosure to a tire, it is possible to highly balance wet grip performance with fuel efficiency and wear resistance in the tire.

Further, a tire of the present disclosure includes the tread rubber of the present disclosure described above. In the tire of the present disclosure, wet grip performance is highly balanced with fuel efficiency and wear resistance.

(Advantageous Effect)

According to the present disclosure, it is possible to provide a rubber composition for tire capable of highly balancing wet grip performance with fuel efficiency and wear resistance in a tire, and a tread rubber containing the rubber composition.

Further, according to the present disclosure, it is possible to provide a tire in which wet grip performance is highly balanced with fuel efficiency and wear resistance.

DETAILED DESCRIPTION

The following describes the rubber composition for tire, the tread rubber, and the tire of the present disclosure in detail based on their embodiments.

<Rubber composition for tire>

The rubber composition for tire of the present disclosure is a rubber composition containing a rubber component and a filler containing at least silica.

The following describes each component of the rubber composition for tire of the present disclosure.

(Rubber component)

The rubber component contains a styrene-butadiene rubber (A) having a glass transition temperature of -50 °C or lower, which is obtained by modifying a compound represented by the formula (1) with a modifying agent, and an unmodified styrene-butadiene rubber (B) whose glass transition temperature is 30 °C or more higher than that of the styrene-butadiene rubber (A).

[Chem. 6]

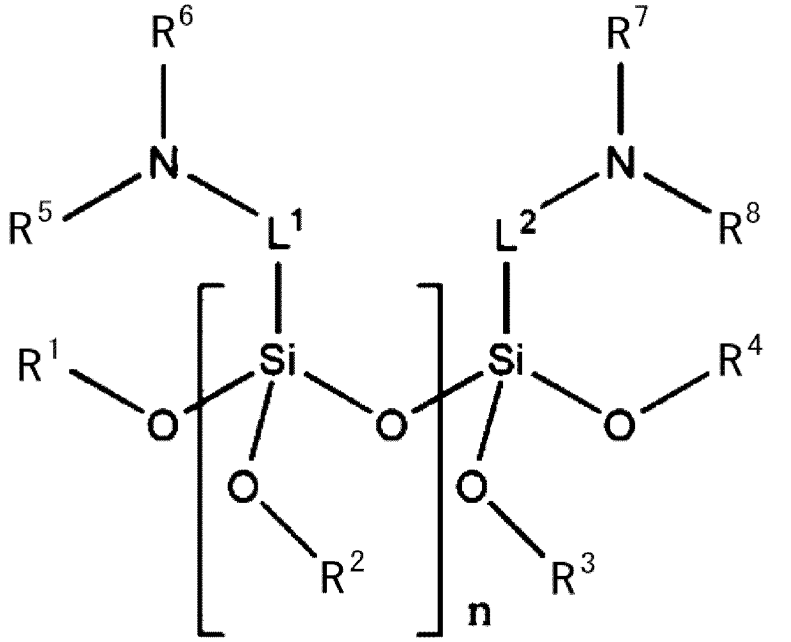

· · · · · (1)

(In the formula, $R^1$ to $R^8$ are each independently an alkyl group having 1 to 20 carbon atoms; $L^1$ and $L^2$ are each independently an alkylene group having 1 to 20 carbon atoms; and n is an integer of 2 to 4.)

By containing the styrene-butadiene rubber (A) and the styrene-butadiene rubber (B) in the rubber component, the wet grip performance can be improved when applied to a tire. Further, in the present disclosure, the rubber component uses the styrene-butadiene rubber (A) modified with a modifying agent containing a compound represented by the formula (1) containing oligosiloxane and a tertiary amino group as filler-affinity functional groups, so that the dispersibility of a filler such as silica in the rubber composition can be improved. As a result, the low heat generating properties of the rubber composition of the present disclosure are significantly improved, and the dispersibility of the filler in the rubber composition of the present disclosure is improved, which can improve the reinforcing properties as well as the physical properties such as fuel efficiency and wear resistance when the rubber composition is applied to a tire.

Regarding the styrene-butadiene rubber (A), in the formula (1), $R^1$ to $R^4$ may each independently be a substituted or unsubstituted alkyl group having 1 to 20 carbon atoms, and when the $R^1$ to $R^4$ are substituted, they may each independently be substituted with at least one substituent selected from the group consisting of an alkyl group having 1 to 10 carbon atoms, a cycloalkyl group having 3 to 10 carbon atoms, an alkoxy group having 1 to 10 carbon atoms, a cycloalkoxy group having 4 to 10 carbon atoms, an aryl group having 6 to 12 carbon atoms, an aryloxy group having 6 to 12 carbon atoms, an alkanoyloxy group having 2 to 12 carbon atoms (Ra-COO-, where Ra is an alkyl group having 1 to 9 carbon atoms), an aralkyloxy group having 7 to 13 carbon atoms, an arylalkyl group having 7 to 13 carbon atoms, and an alkylaryl group having 7 to 13 carbon atoms.

More specifically, the $R^1$ to $R^4$ may be substituted or unsubstituted alkyl groups having 1 to 10 carbon atoms, and even more specifically, the $R^1$ to $R^4$ may each independently be a substituted or unsubstituted alkyl group having 1 to 6 carbon atoms.

In the formula (1), $R^5$ to $R^8$ are each independently a substituted or unsubstituted alkyl group having 1 to 20 carbon atoms. Specifically, they may each independently be a substituted or unsubstituted alkyl group having 1 to 10 carbon atoms. More specifically, they may each independently be a substituted or unsubstituted alkyl group having 1 to 6 carbon atoms, and when substituted, they may be substituted with the substituents described above for $R^1$ to $R^4$.

When the $R^5$ to $R^8$ are not alkyl groups but hydrolyzable substituents, the N-$R^5R^6$ and N-$R^7R^8$ bonds are hydrolyzed to N-H in the presence of water, which may adversely affect the processability of a polymer.

More specifically, in the compound represented by the formula (1), $R^1$ to $R^4$ may be a methyl group or an ethyl group, and $R^5$ to $R^8$ may be an alkyl group having 1 to 10 carbon atoms.

The amino groups in the compound represented by the formula (1), that is, N-$R^5R^6$ and N-$R^7R^8$, are preferably tertiary amino groups. The tertiary amino group allows the compound represented by the formula (1) to have even better processability when used as a modifying agent.

Note that if a protecting group for protecting the amino group, or hydrogen is bonded to the $R^5$ to $R^8$, it may be difficult to realize the effect of the compound represented by the formula (1). When hydrogen is bonded, the anion reacts

with hydrogen in the modification process and loses reactivity, rendering the modification reaction impossible. When a protecting group is bonded, the modification reaction is carried out, but while it is bonded to a polymer terminal, deprotection occurs due to hydrolysis during subsequent processing to obtain a primary or secondary amino group, and the deprotected primary or secondary amino group may increase the viscosity of a compound during subsequent compounding, leading to a decrease in processability.

In the compound represented by the formula (1), $L^1$ and $L^2$ are each independently a substituted or unsubstituted alkylene group having 1 to 20 carbon atoms.

More specifically, $L^1$ and $L^2$ are each independently an alkylene group having 1 to 10 carbon atoms. More specifically, $L^1$ and $L^2$ may each independently be an alkylene group having 1 to 6 carbon atoms such as a methylene group, an ethylene group, or a propylene group.

Regarding the $L^1$ and $L^2$ in the compound represented by the formula (1), as the distance between the Si atom and the N atom in the molecule decreases, the effect increases. However, when Si is directly bonded to N, the bond between Si and N may be broken during subsequent treatment processes, and a secondary amino group formed in this case is likely to be lost by water during subsequent treatment. Therefore, in a modified styrene-butadiene rubber thus obtained, it is difficult to bond to a filler by an amino group which accelerates the bonding to a filler such as silica. As a result, the effect of improving the dispersibility of the filler may be deteriorated. Considering the improvement effect due to the length of the bond between Si and N, the $L^1$ and $L^2$ are more preferably each independently an alkylene group having 1 to 3 carbon atoms such as a methylene group, an ethylene group, or a propylene group. More specifically, they may each independently be a propylene group. Further, $L^1$ and $L^2$ may be substituted with the substituents described above for $R^1$ to $R^4$.

The compound represented by the formula (1) is preferably any one of the compounds represented by the following formulas (1-1) to (1-5), for example. This is because in this case, both of wet grip performance, and fuel efficiency and wear resistance can be achieved at a higher level in a low tire.

[Chem. 7]

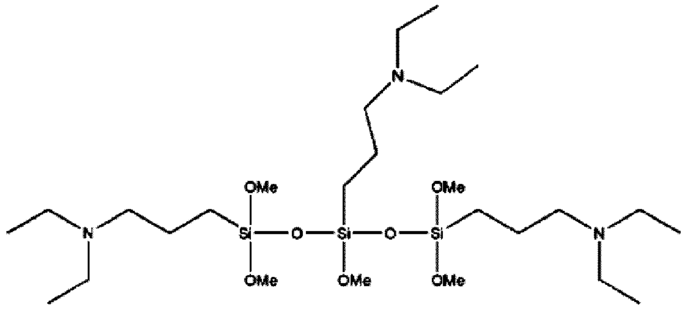

・・・・・(1-1)

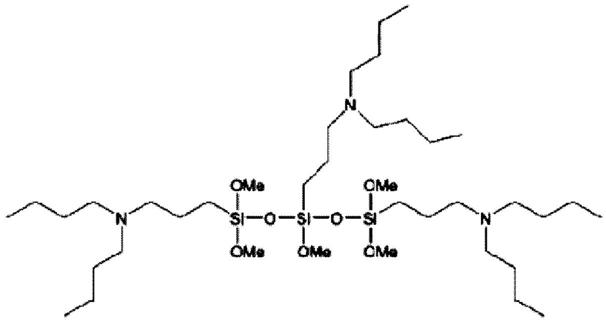

・・・・・(1-2)

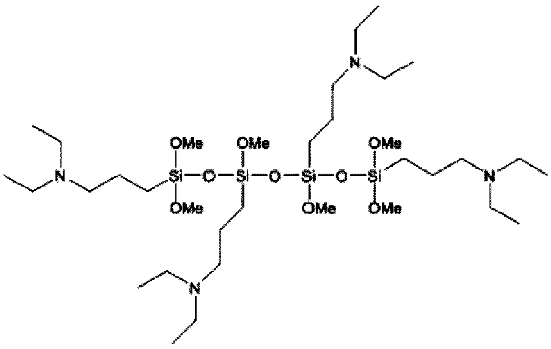

・・・・・(1-3)

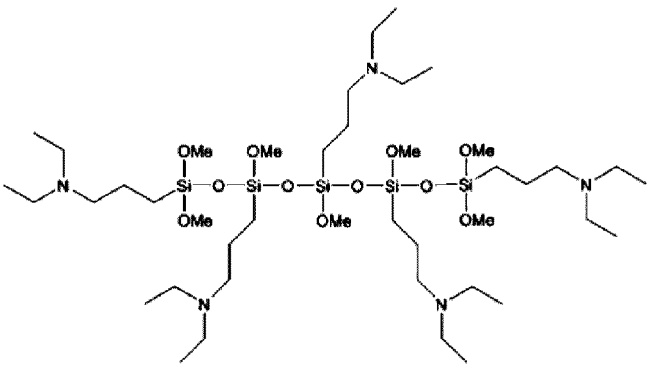

・・・・・(1-4)

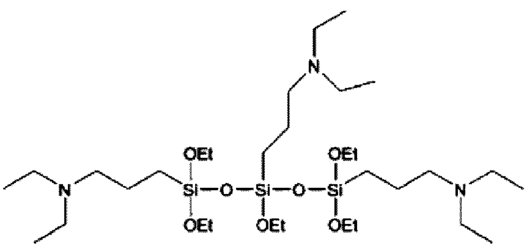

・・・・・(1-5)

In the modifying agent of the present disclosure, the compound represented by the formula (1) is such that an alkoxysilane structure is bonded to an activated terminal of a conjugated diene-based polymer, while a Si-O-Si structure and three or more amino groups bonded to the terminal exhibit an affinity for a filler such as silica, so that the bonding between the filler and the modified copolymer can be promoted as compared with a conventional modifying agent containing one amino group in the molecular. Further, the degree of bonding of the activated terminal of the conjugated diene-based polymer is uniform. When the change in molecular weight distribution is observed before and after coupling, it is found that the molecular weight distribution is constant without becoming larger than before coupling even after coupling. Therefore, there is no deterioration in physical properties of the modified copolymer itself, aggregate of the filler in the rubber composition can be prevented, and the dispersibility of the filler can be increased. As a result, the processability of the rubber composition can be improved. These effects make it possible to particularly improve fuel efficiency and wear resistance in a well-balanced manner when the rubber composition is applied to a tire.

The compound represented by the formula (1) can be produced by a condensation reaction represented by the following reaction formula 1

[Chem. 8]

(Reaction formula 1)

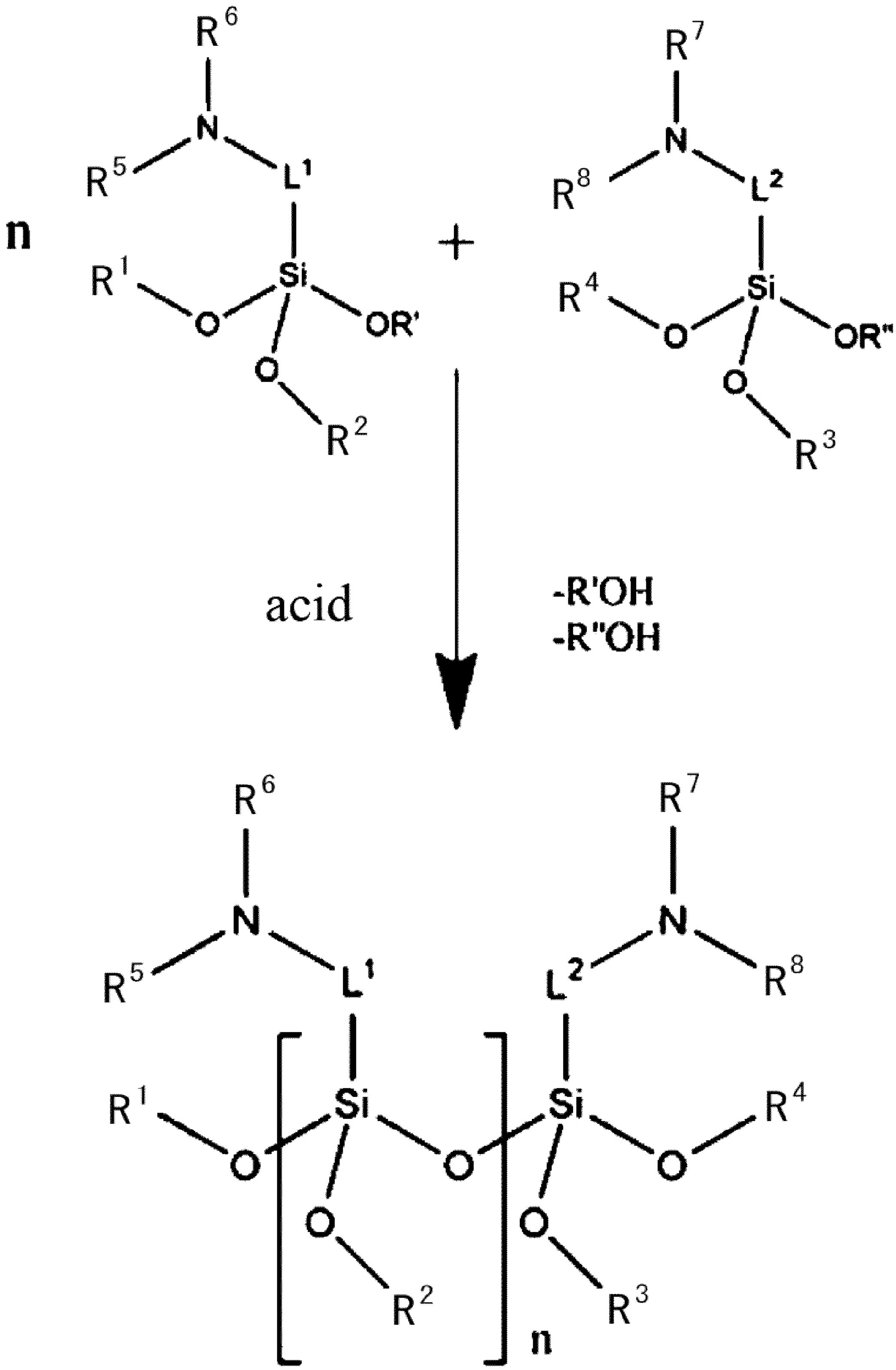


In the reaction formula 1, $R^1$ to $R^8$, $L^1$ and $L^2$, and n are the same as those defined in the formula (1) above, and R' and R" are optional substituents that do not affect the condensation reaction. For example, the R' and R" may each independently be the same as any one of $R^1$ to $R^4$.

The reaction of the reaction formula 1 proceeds under acid conditions, and any acid can be used without limitation as long as it is generally used in a condensation reaction. A person skilled in the art can select the most suitable acid according to various process variables such as the type of reactor in which the reaction is carried out, starting

materials, and the reaction temperature.

The styrene-butadiene rubber (A) modified with a modifying agent containing a compound represented by the formula (1) has a glass transition temperature of -50 °C or lower.

When the glass transition temperature of the styrene-butadiene rubber (A) is -50 °C or lower, it is possible to improve fuel efficiency and wear resistance when the rubber composition is applied to a tire. From the same viewpoint, the glass transition temperature of the styrene-butadiene rubber (A) is preferably -55 °C or lower.

The glass transition temperature of the styrene-butadiene rubber (A) and the styrene-butadiene rubber (B) described later can be measured as follows, for example.

Using each styrene-butadiene rubber as a sample, a DSC250 manufactured by TA Instruments is used, a DSC curve is recorded while raising the temperature from -100 °C at a rate of 20 °C/min under a flow of helium of 50 mL/min, and the peak top (inflection point) of the DSC differential curve is defined as the glass transition temperature.

The styrene-butadiene rubber (A) satisfies the above-described conditions of molecular weight distribution. At the same time, the number-average molecular weight (Mn) is 50,000 g/mol to 2,000,000 g/mol, and more specifically, it can be 200,000 g/mol to 800,000 g/mol. The weight-average molecular weight (Mw) of the styrene-butadiene rubber (A) is 100,000 g/mol to 4,000,000 g/mol, and more specifically, it can be 300,000 g/mol to 1,500,000 g/mol.

When the weight-average molecular weight (Mw) of the styrene-butadiene rubber (A) is less than 100,000 g/mol or when the number-average molecular weight (Mn) is less than 50,000 g/mol, the tensile properties may deteriorate when it is applied to the rubber composition. When the weight-average molecular weight (Mw) exceeds 4,000,000 g/mol or the number-average molecular weight (Mn) exceeds 2,000,000 g/mol, the workability of the rubber composition deteriorates due to the deterioration in the processability of the styrene-butadiene rubber (A), which renders kneading difficult and may render it difficult to sufficiently improve the physical properties of the rubber composition.

More specifically, when the styrene-butadiene rubber (A) according to an example of the present disclosure simultaneously satisfies the conditions of the weight-average molecular weight (Mw), the number-average molecular weight (Mn) as well as the molecular weight distribution and it is applied to a composition made of rubber, the viscoelasticity and the processability of the rubber composition can be improved in a well-balanced manner.

In the present disclosure, the weight-average molecular weight and the number-average molecular weight are each a polystyrene-equivalent molecular weight analyzed by gel permeation chromatography (GPC).

The present disclosure can provide a method of producing the styrene-butadiene rubber (A) using a modifying agent containing a compound represented by the formula (1)

Specifically, the method of producing the styrene-butadiene rubber (A) includes 1) a process of polymerizing a styrene-butadiene rubber in the presence of an organic alkali metal compound in a hydrocarbon solvent to produce an active polymer having alkali metal bonded to least at one terminal, and 2) a process of reacting the active polymer with a modifying agent containing a compound represented by the formula (1).

The process of 1) is a process for producing an active polymer having alkali metal bonded to least at one terminal, and it may be carried out by polymerizing a styrene-based monomer and a butadiene-based monomer in the presence of an organic alkali metal compound in a hydrocarbon solvent.

The hydrocarbon solvent is not particularly limited, and it may be at least one selected from the group consisting of n-pentane, n-hexane, n-heptane, isooctane, cyclohexane, toluene, benzene and xylene, for example.

The organic alkali metal compound may be used in an amount of 0.1 mmol to 1.0 mmol based on 100 g of the total monomers.

The organic alkali metal compound is not particularly limited, and it may be at least one selected from the group consisting of methyllithium, ethyllithium, propyllithium, n-butyllithium, s-butyllithium, t-butyllithium, hexyllithium, n-decyllithium, t-octyllithium, phenyllithium, 1-naphthyllithium, n-eicosyllithium, 4-butylphenyllithium, 4-tolyllithium, cyclohexyllithium, 3,5-di-n-heptylcyclohexyllithium, 4-cyclopentyllithium, naphthyl sodium, naphthyl potassium, lithium alkoxide, sodium alkoxide, potassium alkoxide, lithium sulfonate, sodium sulfonate, potassium sulfonate, lithium amide, sodium amide, potassium amide and lithium isopropyl amide, for example.

The polymerization of the process of 1) may be carried out by further adding a polar additive as necessary, and the polar additive may be added in an amount of 0.001 parts by weight to 1.0 part by weight with respect to 100 parts by weight of the total monomers. Specifically, it may be added in an amount of 0.005 parts by weight to 0.5 parts by weight, and more specifically 0.01 parts by weight to 0.3 parts by weight with respect to 100 parts by weight of the total monomers.

For example, at least one selected from the group consisting of tetrahydrofuran, ditetrahydrofurylpropane, diethyl ether, cycloamal ether, dipropyl ether, ethylene dimethyl ether, ethylene dimethyl ether, diethyl glycol, dimethyl ether, tertiary butoxy ethoxy ethane, bis(3-dimethylaminoethyl)ether, (dimethylaminoethyl)ethyl ether, trimethylamine, triethylamine, tripropylamine and tetramethylethylenediamine may be used as the polar additive.

In the production method, when a conjugated diene-based monomer and an aromatic vinyl-based monomer are copolymerized using the polar additive, it is possible to induce the reaction so that random copolymers can be easily formed by compensating for the difference in the reaction rates.

Further, the polymerization of the process of 1) may be carried out by adiabatic polymerization or by isothermal polymerization.

As used herein, the adiabatic polymerization is a polymerization method including a process of charging an organic alkali metal compound and then carrying out polymerization with self-reaction heat without optionally applying heat, and the isothermal polymerization is a polymerization method of charging the organic alkali metal compound and then optionally applying heat or removing heat to maintain a constant temperature of the polymer.

The polymerization may be carried out in a temperature range of 20 °C to 200 °C, specifically 0 °C to 150 °C, and more specifically in a temperature range of 10 °C to 120 °C.

The process of 2) is a modification reaction process of reacting the active polymer with a modifying agent containing a compound represented by the formula (1) to produce the styrene-butadiene rubber (A).

In this case, the modifying agent containing a compound represented by the formula (1) may be the same as that described above. The compound represented by the formula (1) may be used in a ratio of 0.1 mol to 2.0 mol with respect to 1 mol of the organic alkali metal compound.

The reaction in the process of 2) is a modification reaction for introducing a functional group into a polymer, where each reaction can be carried out in a temperature range of 0 °C to 90 °C for one minute to five hours.

The production method may further include at least one process of recovering the solvent and unreacted monomers and drying, if necessary, after the process of 2).

The content ratio of the styrene-butadiene rubber (A) modified with a modifying agent containing a compound represented by the formula (1) in the rubber component is not particularly limited, but it is preferably 15 % by mass or more and more preferably 20 % by mass or more, and it is preferably 60 % by mass or less and more preferably 50 % by mass or less. When the content ratio of the styrene-butadiene rubber (A) in the rubber component is 15 % by mass or more, fuel efficiency and wear resistance can be further improved when the rubber composition is applied to a tire. On the other hand, when the content ratio of the styrene-butadiene rubber (A) in the rubber component is 60 % by mass or less, the styrene-butadiene rubber (B) described later can be sufficiently contained, and good wet grip performance can be maintained when the rubber composition is applied to a tire.

As described above, the styrene-butadiene rubber (A) is modified with a modifying agent containing a compound represented by the formula (1), but it is preferably further modified with a modifying agent containing a compound represented by the formula (2). Because the dispersibility of the filler in the rubber composition can be further improved, fuel efficiency and wear resistance can be further improved when the rubber composition is applied to a tire.

[Chem. 9]

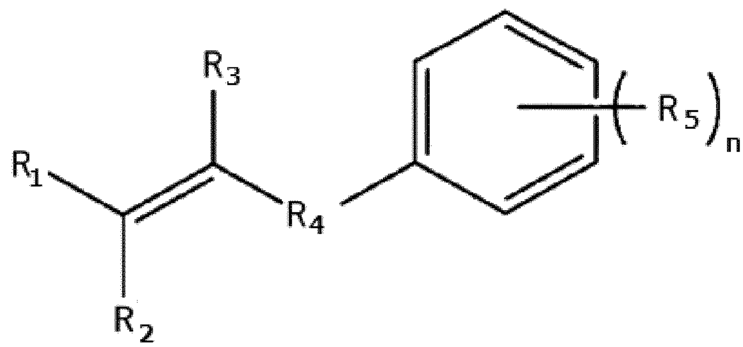

· · · · (2)

In the formula (2), $R_1$ to $R_3$ are each independently hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms, a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, $R_4$ is a single bond; an alkylene group having 1 to 20 carbon atoms substituted or unsubstituted with a substituent; a cycloalkylene group having 5 to 20 carbon atoms substituted or unsubstituted with a substituent; or an arylene group having 5 to 20 carbon atoms substituted or unsubstituted with a substituent, where the substituent is an alkyl group having 1 to 10 carbon atoms, a cycloalkyl group having 5 to 10 carbon atoms, or an aryl group having 6 to 20 carbon atoms, and $R_5$ is an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms; or a functional group represented by the following chemical formula (2a) or chemical formula (2b), where n is an

integer of 1 to 5, at least one $R_5$ is a functional group represented by the following chemical formula (2a) or chemical formula (2b), and when n is an integer of 2 to 5, a plurality of $R_5$s may be the same or different from each other.

[Chem. 10]

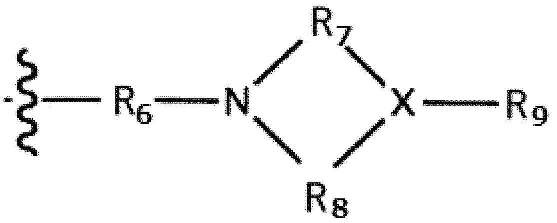

· · · · (2a)

In the formula (2a), $R_6$ is an alkylene group having 1 to 20 carbon atoms substituted or unsubstituted with a substituent; a cycloalkylene group having 5 to 20 carbon atoms substituted or unsubstituted with a substituent; or an arylene group having 6 to 20 carbon atoms substituted or unsubstituted with a substituent, where the substituent is an alkyl group having 1 to 10 carbon atoms, a cycloalkyl group having 5 to 10 carbon atoms, or an aryl group having 6 to 20 carbon atoms, $R_7$ and $R_8$ are each independently an alkyl group having 1 to 10 carbon atoms, a cycloalkyl group having 5 to 10 carbon atoms, or an alkylene group having 1 to 20 carbon atoms substituted or unsubstituted with an aryl group having 6 to 20 carbon atoms, $R_9$ is hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, X is a N, O or S atom, and when X is O or S, there is no $R_9$.

[Chem. 11]

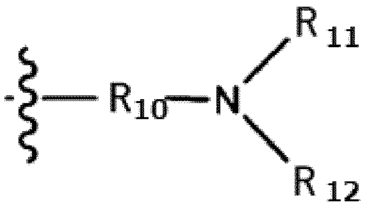

· · · · (2b)

In the formula (2b), $R_{10}$ is an alkylene group having 1 to 20 carbon atoms substituted or unsubstituted with a substituent; a cycloalkylene group having 5 to 20 carbon atoms substituted or unsubstituted with a substituent; or an arylene group having 6 to 20 carbon atoms substituted or unsubstituted with a substituent, where the substituent is an alkyl group having 1 to 10 carbon atoms, a cycloalkyl group having 5 to 10 carbon atoms, or an aryl group having 6 to 20 carbon atoms, and $R_{11}$ and $R_{12}$ are each independently an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

In the compound represented by the formula (2), $R_1$ to $R_3$ are each independently hydrogen; an alkyl group having 1 to 10 carbon atoms; an alkenyl group having 2 to 10 carbon atoms; or an alkynyl group having 2 to 10 carbon atoms, $R_4$ is a single bond; or an unsubstituted alkylene group having 1 to 10 carbon atoms, $R_5$ is an alkyl group having 1 to 10 carbon atoms; an alkenyl group having 2 to 10 carbon atoms; an alkynyl group having 2 to 10 carbon atoms; or a functional group represented by the following chemical formula (2a) or chemical formula (2b), in the chemical formula (2a), $R_6$ is an unsubstituted alkylene group having 1 to 10 carbon atoms, $R_7$ and $R_8$ are each independently an unsubstituted alkylene group having 1 to 10 carbon atoms; $R_7$ is an alkyl group having 1 to 10 carbon atoms; a cycloalkyl group having 5 to 20 carbon atoms; an aryl group having 6 to 20 carbon atoms; or a heterocyclic group having 3 to 20 carbon atoms, in the chemical formula (2b), $R_{10}$ is an unsubstituted alkylene group having 1 to 10 carbon atoms; and $R_{11}$ and $R_{12}$ may each independently be an alkyl group having 1 to 10 carbon atoms; a cycloalkyl group having 5 to 20 carbon atoms; an aryl group having 6 to 20 carbon atoms; or a heterocyclic group having 3 to 20 carbon atoms.

More specifically, the compound represented by the formula (2) may be a compound represented by the

following formula (2-1) to formula (2-3).

[Chem. 12]

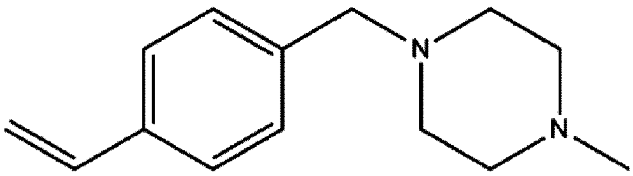

···· (2-1)

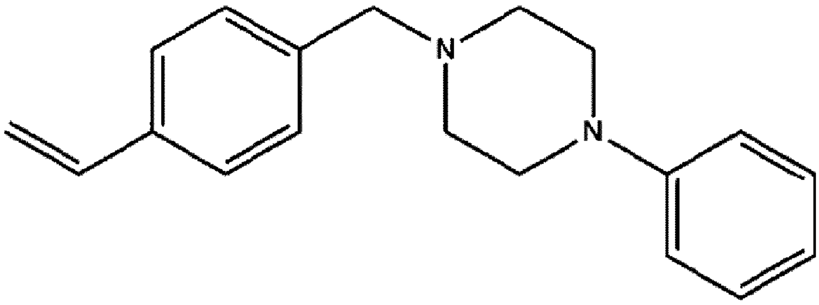

···· (2-2)

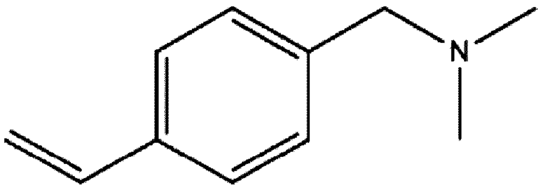

···· (2-3)

When the styrene-butadiene rubber (A) is modified with a modifying agent containing a compound represented by the formula (2), the modifying agent containing a compound represented by the formula (2) is used as a modification initiator.

Specifically, for example, by polymerizing a conjugated diene monomer and an aromatic vinyl monomer in the presence of a modifying agent containing a compound represented by the formula (2) in a hydrocarbon solvent, a modified group derived from the compound represented by the formula (2) can be imparted to the copolymer.

In addition to the styrene-butadiene rubber (A), the rubber composition of the present disclosure further contains an unmodified styrene-butadiene rubber (B) whose glass transition temperature is 30°C or more higher than that of the styrene-butadiene rubber (A).

By containing a styrene-butadiene rubber (B) having a high glass transition temperature in the rubber component, wet grip performance can be improved when the rubber composition is applied to a tire.

The styrene-butadiene rubber (B) needs to have a glass transition temperature 30 °C or more, preferably 35 °C or more, higher than that of the styrene-butadiene rubber (A). This can increase the flexibility of the rubber and sufficiently improve the fuel efficiency and the wear resistance of a tire using the rubber composition.

The content ratio of the styrene-butadiene rubber (B) in the rubber component is not particularly limited, but it is preferably 30 % by mass or more and more preferably 40 % by mass or more, and it is preferably 90 % by mass or less and more preferably 80 % by mass or less. When the content ratio of the styrene-butadiene rubber (B) in the rubber component is 30 % by mass or more, the wet grip performance can be further improved when the rubber composition is applied to a tire. On the other hand, when the content ratio of the styrene-butadiene rubber (B) in the rubber component is 90 % by mass or less, good fuel efficiency and wear resistance can be maintained when the rubber composition is applied to a tire.

From the viewpoint of achieving both of wet grip performance, and fuel efficiency and wear resistance at a higher level when the rubber composition is applied to a tire, the content ratio of the styrene-butadiene rubber (B) is preferably larger than the content ratio of the styrene-butadiene rubber (A) (content ratio of styrene-butadiene rubber (B)/content ratio of styrene-butadiene rubber (A) > 1).

The rubber component may also contain a rubber (another rubber) different from the above-described styrene-butadiene rubber (A) and the styrene-butadiene rubber (B) as a rubber component for the purpose of improving fuel efficiency, wear resistance and other properties when the rubber composition is applied to a tire.
The other rubber can be appropriately selected according to the required performance. For example, it may be at least one of diene-based rubbers such as natural rubber (NR), polybutadiene (BR) and polyisoprene (IR) ethylene-propylene copolymer rubber, and non-diene-based rubbers such as butyl rubber.
However, from the viewpoint of achieving both of wet grip performance, and fuel efficiency and wear resistance at a higher level when the rubber composition of the present disclosure is applied to a tire, the rubber component is preferably composed only of the styrene-butadiene rubber (A) and the styrene-butadiene rubber (B).

(Filler)

In addition to the above-described rubber component, the rubber composition for tire of the present disclosure contains a filler containing at least silica.
By using the filler together with the rubber component containing the styrene-butadiene rubber (A), the dispersibility of the filler is increased, and fuel efficiency and wear resistance can be realized when the rubber composition is applied to a tire.
The content of the filler is not particularly limited, but it is preferably 10 parts by mass or more, more preferably 20 parts by mass or more, and still more preferably 30 parts by mass or more with respect to 100 parts by mass of the rubber component, and it is preferably 160 parts by mass or less, more preferably 140 parts by mass or less, and still more preferably 120 parts by mass or less with respect to 100 parts by mass of the rubber component. This is because by optimizing the content of the filler, both of wet grip performance, and fuel efficiency and wear resistance can be achieved at a higher level. When the content is 10 parts by mass or more, sufficient wet grip performance, fuel efficiency and wear resistance can be obtained, and when the content is 160 parts by mass or less, deterioration of low heat generating properties and processability can be suppressed.
The silica contained in the filler is not particularly limited and can be appropriately selected according to the required performance. Examples of the silica include wet silica (hydrous silicate), dry silica (anhydrous silicate), calcium silicate, and aluminum silicate, among which wet silica is preferred. These silicas may be used alone or in combination of two or more.
The wet silica may be precipitated silica. The precipitated silica is silica obtained by aggregating primary particles by, at an initial stage of production, advancing the reaction of a reaction solution at a relatively high temperature and in a neutral to alkaline pH range to grow silica primary particles and then controlling them to acidic pH range.
The silica preferably has a CTAB (cetyltrimethylammonium bromide) specific surface area of 50 $m^2/g$ to 350 $m^2/g$. When the CTAB specific surface area of the silica is 50 $m^2/g$ or more, the wear resistance is further improved, and when the CTAB specific surface area of the silica is 350 $m^2/g$ or less, the rolling resistance is reduced.
The silica preferably has a nitrogen adsorption specific surface area (BET method) of 80 $m^2/g$ or more and less than 330 $m^2/g$. When the nitrogen adsorption specific surface area (BET method) of the silica is 80 $m^2/g$ or more, a tire using the rubber composition can be sufficiently reinforced, and the fuel efficiency of the tire can be further improved. When the nitrogen adsorption specific surface area (BET method) of the silica is less than 330 $m^2/g$, the elastic modulus of the rubber composition is not too high, and the wet grip performance of a tire using the rubber composition is further improved. From the viewpoint of further reducing the rolling resistance and further improving the wear resistance of the tire, the nitrogen adsorption specific surface area (BET method) of the silica is preferably 130 $m^2/g$ or more, preferably 150 $m^2/g$ or more, preferably 170 $m^2/g$ or more, preferably 180 $m^2/g$ or more, preferably 190 $m^2/g$ or more, and more preferably 195 $m^2/g$ or more. Further, from the viewpoint of further improving the wet grip performance of the tire, the nitrogen adsorption specific surface area (BET method) of the silica is preferably 300 $m^2/g$ or less, more preferably 280 $m^2/g$ or less, and still more preferably 270 $m^2/g$ or less.
The filler preferably contains carbon black. The carbon black can reinforce the rubber composition to improve the wear resistance of the rubber composition.
The carbon black is not particularly limited, and examples thereof include GPF, FEF, HAF, ISAF, and SAF grade carbon black. These carbon black products may be used alone or in combination of two or more.
In the filler, the content ratio of silica in the total amount of the silica and the carbon black is preferably 50 % by mass or more and less than 100 % by mass, more preferably 60 % by mass or more and less than 100 % by mass, still more preferably 70 % by mass or more and less than 100 %, even more preferably 80 % by mass or more and less than 100 % by mass, and particularly preferably 90 % by mass or more and less than 100 % by mass. The reason is as follows. When the content ratio of silica in the total amount of the silica and the carbon black is 50 % by mass or more, deterioration in fuel efficiency due to an increase in carbon black can be suppressed, and when the content ratio is less than 100 % by mass, the reinforcement effect of carbon black can be ensured.
In addition to silica and carbon black, the filler can also use another inorganic compound represented by the

following formula (I), for example.

$$nM \cdot xSiO_Y \cdot zH_2O \qquad (I)$$

(In the formula, M is at least one selected from metal selected from the group consisting of Al, Mg, Ti, Ca and Zr, oxides or hydroxides of these metals, hydrates thereof, and carbonates of these metals; and n, x, y and z are an integer of 1 to 5, an integer of 0 to 10, an integer of 2 to 5, and an integer of 0 to 10, respectively.)

When the filler contains another inorganic compound, the content thereof is preferably about 5 parts by mass to 30 parts by mass with respect to 100 parts by mass of the rubber component.

Examples of the inorganic compound of the formula (I) include alumina ($Al_2O_3$) such as $\gamma$-alumina and $\alpha$-alumina; alumina monohydrate ($Al_2O_3 \cdot H_2O$) such as boehmite and diaspore; aluminum hydroxide [$Al(OH)_3$] such as gibbsite and bayerite; aluminum carbonate [$Al_2(CO_3)_3$], magnesium hydroxide [$Mg(OH)_2$], magnesium oxide (MgO), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], aluminum oxide magnesium ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$, etc.), magnesium silicate ($Mg_2SiO_4$, $MgSiO_3$, etc.), calcium silicate ($Ca_2SiO_4$, etc.), aluminum calcium silicate ($Al_2O_3 \cdot CaO \cdot 2SiO_2$, etc.), calcium magnesium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], and crystalline aluminosilicate containing hydrogen, alkali metal or alkaline earth metal that corrects the charge like various zeolites.

(Resin)

The rubber composition for tire of the present disclosure preferably further contains a resin in addition to the above-described rubber component and filler.

By further containing a resin, it is possible to improve the processability of the rubber composition for tire and to further improve wet grip performance when the rubber composition is applied to a tire.

The type of the resin is not particularly limited. Examples thereof include a $C_5$-based resin, a $C_5$-$C_9$-based resin, a $C_9$-based resin, a terpene-based resin, a dicyclopentadiene-based resin, and a terpene-aromatic compound-based resin. These resins may be used alone or in combination of two or more.

Examples of the $C_5$-based resin include an aliphatic petroleum resin obtained by (co)polymerizing a $C_5$ fraction obtained by pyrolysis of naphtha in the petrochemical industry.

The $C_5$ fraction usually includes olefin-based hydrocarbon such as 1-pentene, 2-pentene, 2-methyl-1-butene, 2-methyl-2-butene, or 3-methyl-1-butene; diolefin-based hydrocarbon such as 2-methyl-1,3-butadiene, 1,2-pentadiene, 1,3-pentadiene, or 3-methyl-1,2-butadiene; or the like. Commercially available products can be used as the C5-based resin.

The $C_5$-$C_9$-based resin refers to a $C_5$-$C_9$-based synthetic petroleum resin, and examples of the $C_5$-$C_9$-based resin include a solid polymer obtained by polymerizing a $C_5$-$C_{11}$ fraction derived from petroleum using a Friedel-Crafts catalyst such as $AlCl_3$ or $BF_3$. More specifically, examples thereof include copolymers containing styrene, vinyltoluene, $\alpha$-methylstyrene, indene, and the like as main components.

The $C_5$-$C_9$-based resin is preferably a resin containing a small amount of $C_9$ or higher component from the viewpoint of the compatibility with the rubber component. As used herein, the words "a small amount of $C_9$ or higher component" mean that the $C_9$ or higher component in the total amount of the resin is less than 50 % by mass, preferably 40 % by mass or less. Commercially available products can be used as the $C_5$-$C_9$-based resin.

The $C_9$-based resin refers to a $C_9$-based synthetic petroleum resin, and it is a solid polymer obtained by polymerizing a $C_9$ fraction using a Friedel-Crafts type catalyst such as $AlCl_3$ or $BF_3$, for example.

Examples of the $C_9$-based resin include copolymers containing indene, $\alpha$-methylstyrene, vinyltoluene, and the like as main components.

The terpene-based resin is a solid-state resin obtained by compounding turpentine oil, which is obtained simultaneously when obtaining rosin from pine trees, or a polymerizable component separated from the turpentine oil, and then polymerizing the turpentine oil or the polymerizable component using a Friedel-Crafts catalyst. Examples thereof include a $\beta$-pinene resin and a $\alpha$-pinene resin. Atypical example of the terpene-aromatic compound-based resin is a terpene-phenol resin. The terpene-phenol resin may be obtained with a method of causing terpenes to react with various phenols using a Friedel-Crafts catalyst, or further condensing the resultant with formalin. The terpenes as a raw material are not particularly limited, but they are preferably monoterpene hydrocarbon such as $\alpha$-pinene and limonene, more preferably terpenes containing $\alpha$-pinene, and particularly preferably $\alpha$-pinene. Note that styrene or the like may be contained in the skeleton.

The dicyclopentadiene-based resin refers to, for example, a resin obtained by polymerizing dicyclopentadiene using a Friedel-Crafts catalyst such as $AlCl_3$ or $BF_3$.

A resin serving as a raw material for a hydrogenated resin may include, for example, a resin obtained by copolymerizing a $C_5$ fraction and dicyclopentadiene (DCPD) (Cs-DCPD-based resin).

When a dicyclopentadiene-derived component is 50 % by mass or more in the total amount of the resin, the Cs-DCPD-based resin is included in the dicyclopentadiene-based resin. When the dicyclopentadiene-derived component is less than 50 % by mass in the total amount of the resin, the $C_5$-DCPD-based resin is included in the $C_5$-based resin. The same applies to a case where a small amount of a third component or the like is further contained.

The resin is preferably at least partially hydrogenated. When the resin is at least partially hydrogenated, the compatibility with a diene-based rubber component A such as the isoprene skeleton rubber can be increased, the mobility of the rubber component can be controlled, and the hysteresis loss (tan$\delta$) in the low temperature region can be improved. As a result, wet grip performance is improved in a tire using the rubber composition.

The resin which is at least partially hydrogenated means a resin obtained by reductive hydrogenation of a resin.

The resin preferably has a softening point of higher than 110 °C and a polystyrene-equivalent weight-average molecular weight of 200 g/mol to 1600 g/mol. When a rubber composition containing such a resin is applied to a tire, the wear resistance of the tire can be further improved.

When the softening point of the resin is higher than 110 °C, a tire using the rubber composition can be sufficiently reinforced, and the wear resistance can be further improved. From the viewpoint of the wear resistance of the tire, the softening point of the resin is more preferably 116 °C or higher, more preferably 120 °C or higher, more preferably 123 °C or higher, and even more preferably 127 °C or higher. From the viewpoint of processability, the softening point of the resin is preferably 160 °C or lower, more preferably 150 °C or lower, more preferably 145 °C or lower, more preferably 141 °C or lower, and even more preferably 136 °C or lower.

The polystyrene-equivalent weight-average molecular weight of the resin can be calculated, for example, by measuring an average molecular weight by gel permeation chromatography (GPC) under the following conditions.

- Column temperature: 40 °C
- Injection volume :50 $\mu$L
- Carrier and flow rate: tetrahydrofuran 0.6mL/min
- Sample preparation: dissolve approximately 2.5 mg of the resin component in 10 mL of tetrahydrofuran

The softening point of the resin component can be measured according to, for example, a JIS-K2207-1996 (ring and ball method).

When the polystyrene-equivalent weight-average molecular weight of the resin is 200 g/mol or more, the resin hardly precipitates from the tire, and the effect of the resin can be sufficiently exhibited. When the polystyrene-equivalent weight-average molecular weight is 1600 g/mol or less, the resin is easily compatible with the rubber component.

From the viewpoint of suppressing precipitation of the resin from the tire and suppressing the deterioration of the tire appearance, the polystyrene-equivalent weight-average molecular weight of the resin is preferably 500 g/mol or more, more preferably 550 g/mol or more, more preferably 600 g/mol or more, more preferably 650 g/mol or more, and even more preferably 700 g/mol or more. Further, from the viewpoint of improving the compatibility of the resin to the rubber component and further improving the effect of the resin, the polystyrene-equivalent weight-average molecular weight of the resin is preferably 1350 g/mol or less, more preferably 1330 g/mol or less, more preferably 1300 g/mol or less, more preferably 1200 g/mol or less, more preferably 1100 g/mol or less, more preferably 1000 g/mol or less, and even more preferably 950g/mol or less.

A ratio ($Ts_{HR}/Mw_{HR}$) of the softening point ($Ts_{HR}$) (unit: °C) of the resin to the polystyrene-equivalent weight-average molecular weight ($Mw_{HR}$) (unit: g/mol) of the resin is preferably 0.07 or more, more preferably 0.083 or more, more preferably 0.095 or more, more preferably 0.104 or more, more preferably 0.125 or more, more preferably 0.135 or more, more preferably 0.14 or more, and even more preferably 0.141 or more. Further, the ratio ($Ts_{HR}/Mw_{HR}$) is preferably 0.25 or less, preferably 0.24 or less, preferably 0.23 or less, preferably 0.19 or less, more preferably 0.18 or less, and even more preferably 0.17 or less.

The content of the resin is preferably 1 part by mass to 50 parts by mass with respect to 100 parts by mass of the rubber component. When the content of the resin in the rubber composition is 1 part by mass or more with respect to 100 parts by mass of the rubber component, the effect of the resin is sufficiently exhibited. When the content is 50 parts by mass or less, the resin hardly precipitates from the tire, and the effect of the resin can be sufficiently exhibited. On the other hand, when the content of the resin exceeds 50 parts by mass with respect to 100 parts by mass of the rubber component, the fuel efficiency and the wear resistance of a tire using the rubber composition deteriorate. From the viewpoint of further improving the effect of the resin, the content of the resin in the rubber composition is preferably 5 parts by mass or more, more preferably 7 parts by mass or more, and still more preferably 9 parts by mass or more, with respect to 100 parts by mass of the rubber component. From the viewpoint of suppressing precipitation of the resin from the tire and suppressing the deterioration of the tire appearance, the content of the resin in the rubber composition is more preferably 45 parts by mass or less, still more preferably 40 parts by mass or less, and even more preferably

35 parts by mass or less, with respect to 100 parts by mass of the rubber component.

(Other components)

In addition to the above-described rubber component, filler and resin component, the rubber composition for tire of the present disclosure may contain various components commonly used in the rubber industry, if necessary. Examples thereof include a silane coupling agent, an antioxidant, wax, a softener, a processing aid, stearic acid, zinc oxide (zinc white), a vulcanization accelerator, and a vulcanizing agent, which may be appropriately selected and contained if the effects of the present disclosure are not impaired. Commercial products may be suitably used as these compounding agents.

Because the rubber composition for tire of the present disclosure contains silica as a filler, it is preferable to contain a silane coupling agent to improve the effect of the silica. Examples of the silane coupling agent include bis (3-triethoxysilylpropyl) tetrasulfide, bis (3-triethoxysilylpropyl) trisulfide, bis (3-triethoxysilylpropyl) disulfide, bis (2-triethoxysilylethyl) tetrasulfide, bis (3-trimethoxysilylpropyl) tetrasulfide, bis (2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis (3-diethoxymethylsilylpropyl) tetrasulfide, 3-mercaptopropyldimethoxymethylsilane, dimethoxymethylsilylpropyl-N,N-dimethylthiocarbamoyltetrasulfide, and dimethoxymethylsilylpropylbenzothiazolyl tetrasulfide. The content of the silane coupling agent is preferably in a range of 2 parts by mass to 20 parts by mass and more preferably in a range of 5 parts by mass to 15 parts by mass with respect to 100 parts by mass of the silica.

Examples of the antioxidant include N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), and N,N'-diphenyl-p-phenylenediamine (DPPD). The content of the antioxidant is not particularly limited, and it is preferably in a range of 0.1 parts by mass to 5 parts by mass and more preferably 1 part by mass to 4 parts by mass with respect to 100 parts by mass of the rubber component.

Examples of the wax include paraffin wax and microcrystalline wax. The content of the wax is not particularly limited, and it is preferably in a range of 0.1 parts by mass to 5 parts by mass and more preferably 1 part by mass to 4 parts by mass with respect to 100 parts by mass of the rubber component.

The content of the zinc oxide (zinc white) is not particularly limited, and it is preferably in a range of 0.1 parts by mass to 10 parts by mass and more preferably 1 part by mass to 8 parts by mass with respect to 100 parts by mass of the rubber component.

Examples of the vulcanization accelerator include a sulfenamide-based vulcanization accelerator, a guanidine-based vulcanization accelerator, a thiazole-based vulcanization accelerator, a thiuram-based vulcanization accelerator, and a dithiocarbamate-based vulcanization accelerator. These vulcanization accelerators may be used alone or in combination of two or more. The content of the vulcanization accelerator is not particularly limited, and it is preferably in a range of 0.1 parts by mass to 5 parts by mass and more preferably in a range of 0.2 parts by mass to 4 parts by mass with respect to 100 parts by mass of the rubber component.

Examples of the vulcanizing agent include sulfur. The content of the vulcanizing agent, as a sulfur content, is preferably in a range of 0.1 parts by mass to 10 parts by mass and more preferably in a range of 1 part by mass to 4 parts by mass with respect to 100 parts by mass of the rubber component.

(Method of producing rubber composition for tire)

A method of producing the rubber composition for tire is not particularly limited. For example, the rubber composition for tire can be produced by blending various components appropriately selected as necessary with the above-described rubber component, resin component and filler, and performing kneading, heating, extrusion, and other processes. Further, by vulcanizing the obtained rubber composition, it is possible to obtain a vulcanized rubber.

There is no particular limitation on the conditions of the kneading, and various conditions such as the charge volume of a kneading device, the rotation speed of a rotor, the ram pressure, the kneading temperature and the kneading time, and the type of kneading device can be appropriately selected depending on the purpose. Examples of the kneading device include a Banbury mixer, an intermix, a kneader and a roll, which are normally used for kneading a rubber composition.

There is no particular limitation on the conditions of the heating, and various conditions such as heating temperature, heating time, and heating device can be appropriately selected depending on the purpose. Examples of the heating device include a heating roll machine normally used for heating a rubber composition.

There is no particular limitation on the conditions of the extrusion, and various conditions such as extrusion time, extrusion speed, extrusion device, and extrusion temperature can be appropriately selected depending on the purpose. Examples of the extrusion device include an extruder normally used for extruding a rubber composition. The extrusion temperature can be appropriately determined.

The device, method, conditions, and the like for performing the vulcanization are not particularly limited and can be appropriately selected depending on the purpose. Examples of the device for performing the vulcanization include a molding vulcanizer using a mold, which is normally used for vulcanizing a rubber composition. Regarding the vulcanization conditions, the temperature is, for example, about 100 °C to 190 °C.

<Tread rubber>

The tread rubber of the present disclosure contains the rubber composition for tire described above. Because the tread rubber of the present disclosure contains the rubber composition for tire described above, it is possible to highly balance wet grip performance with fuel efficiency and wear resistance in a tire using the tread rubber.

The tread rubber of the present disclosure may be applied to a new tire or may be applied to a retreaded tire.

<Tire>

The tire of the present disclosure includes the tread rubber described above. Because the tire of the present disclosure includes the tread rubber described above, wet grip performance is highly balanced with fuel efficiency and wear resistance in the tire.

In accordance with the type of tire intended for use, the tire of the present disclosure may be obtained by first forming a tire using an unvulcanized rubber composition and then vulcanizing the tire, or by first forming a tire using semi-vulcanized rubber obtained by a preliminary vulcanization process or the like and then fully vulcanizing the tire. The tire of the present disclosure is preferably a pneumatic tire. The pneumatic tire may be filled with ordinary air or air with an adjusted partial pressure of oxygen, or may be filled with an inert gas such as nitrogen, argon, or helium.

EXAMPLES

The following describes the present disclosure in more detail based on examples. The present disclosure is not limited by any means to these examples.

<Examples and Comparative Example>

According to the compositions listed in Table 1, components were blended and kneaded to prepare rubber compositions of Examples and Comparative Example. The blending amount of the rubber component listed in Table 1 is a value including the amount of oil extension and is indicated as an integer after rounding off to the nearest whole number.

The obtained rubber compositions of Examples and Comparative Example were vulcanized to obtain vulcanized rubber test pieces.

The "both-terminal-modified SBR" and "modified SBR" in Table 1 are prepared under the following conditions.

(Preparation of both-terminal-modified SBR)

First, two vacuum-dried 4L stainless steel pressure vessels are prepared. Next, 944 g of cyclohexane, 161 g of a compound represented by the following chemical formula 2-1, and 86 g of tetramethylethylenediamine are charged into a first pressure vessel to produce a first reaction solution. At the same time, 318 g of liquid 20 % by weight n-butyllithium and 874 g of cyclohexane are charged into a second pressure vessel to produce a second reaction solution. At this time, the molar ratio of the compound represented by the following chemical formula (2-1), the n-butyllithium, and the tetramethylethylenediamine is 1: 1: 1. The pressure of each pressure vessel is maintained at 7 bar, and the first reaction solution is injected into a first continuous channel at an injection rate of 1.0 g/min and the second reaction solution is injected into a second continuous channel at an injection rate of 1.0 g/min injection rate in a continuous-type reactor using a mass flow meter. At this time, the temperature of the continuous-type reactor is maintained at - 10 °C, the internal pressure is maintained at 3 bar using a backpressure regulator, and the residence time in the reactor is adjusted to be within 10 minutes. A modification initiator is obtained when the reaction is completed.

[Chem. 13]

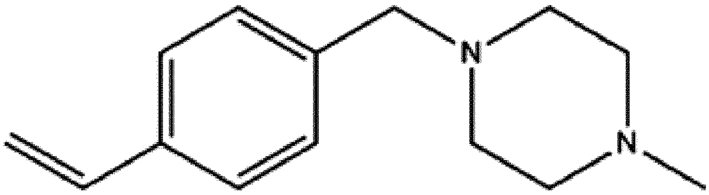

· · · · (2-1)

Next, a styrene solution containing 60 % by weight of styrene dissolved in n-hexane is injected at a rate of 0.84 kg/h, a 1,3-butadiene solution containing 60 % by weight of 1,3-butadiene dissolved in n-hexane is injected at a rate of 15.10 kg/h, n-hexane is injected at a rate of 47.66 kg/h, a 1,2-butadiene solution containing 2.0 % by weight of 1,2-butadiene dissolved in n-hexane is injected at a rate of 10 kg/h, a solution containing 10 % by weight of 2,2-(di-2(tetrahydrofuryl)propane) dissolved in n-hexane as a polar additive is injected at a rate of 10.0 g/h, the modification initiator produced in the above production example is injected at a rate of 292.50 g/h to a first reactor among continuous reactors in which three reactors are connected in series. At this time, the temperature of the first reactor is maintained at 50 °C, and when the polymerization conversion rate reaches 43 %, the polymer is transferred from the first reactor to a second reactor through a transfer pipe.

Subsequently, a 1,3-butadiene solution containing 60 % by weight of 1,3-butadiene dissolved in n-hexane is injected at a rate of 0.68 kg/h into the second reactor. At this time, the temperature of the second reactor is maintained at 65 °C, and when the polymerization conversion rate reaches 95 %, the polymer is transferred from the second reactor to a third reactor through a transfer pipe.

The polymer is transferred from the second reactor to the third reactor, and a solution in which the following formula (1-1) is dissolved as a modifying agent is charged into the third reactor (modifying agent: act. Li = 1: 1 mol). The temperature of the third reactor is maintained at 65 °C.

[Chem. 14]

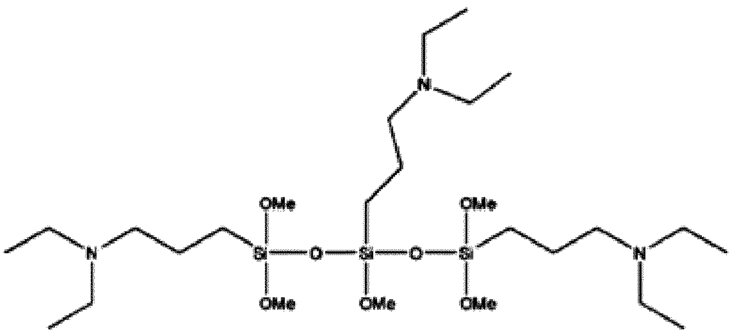

· · · · (1-1)

Next, a solution of IR1520 (BASF) dissolved at 30 % by weight as an antioxidant is injected at a rate of 170 g/h into the polymerization solution discharged from the third reactor and stirred. As a result, the obtained polymer is placed in hot water heated with steam and stirred to remove the solvent, thereby obtaining a sample of both-terminal-modified SBR.

As a result of measuring the microstructure of the obtained both-terminal-modified SBR, the styrene content is 5 % by mass, and the vinyl content in the butadiene moiety is 37 %. Further, the glass transition temperature is -65.86 °C.

(Production example of modified SBR)

A tank reactor equipped with a stirrer, that is, a tank pressure vessel including a stirrer and a jacket for temperature control, having an internal volume of 10 L, having a ratio (L/D) between the internal height (L) and the internal diameter (D) of 4.0, and having an inlet in a bottom portion and an outlet in a top portion, was used as a polymerization reactor. Then, 1,3-butadiene, styrene, and n-hexane, from which water had been removed beforehand, were mixed respectively at rates of 17.2 g/min, 10.5 g/min, and 145.3 g/min. In a static mixer provided in the middle of a pipe used for supplying the obtained mixed solution to the inlet of the reactor, n-butyllithium for performing a treatment of inactivating remaining impurities was added at a rate of 0.117 mmol/min to be mixed, and the resultant mixed solution was continuously supplied to the bottom portion of the reactor. Further, 2,2-bis(2-oxolanyl) propane as a polar substance and n-butyllithium as a

polymerization initiator were supplied respectively at rates of 0.019 g/min and 0.242 mmol/min to the bottom portion of the polymerization reactor in which the mixed solution was vigorously stirred by the stirrer, to continuously perform a polymerization reaction. The temperature was controlled so that the temperature of a polymer solution in the outlet in the top portion of the reactor could be 75 °C. When the polymerization was sufficiently stabilized, a small amount of the polymerization solution prior to addition of a coupling agent was taken out through the outlet in the top portion of the reactor, an antioxidant (BHT) was added thereto in an amount of 0.2 g per 100 g of the resultant polymer, and the solvent was then removed.

Next, to the polymer solution flown out from the outlet of the reactor, tetrakis(3-trimethoxysilylpropyl)-1,3-propanediamine diluted to 2.74 mmol/L (in the table, it is abbreviated as "A") as a coupling agent was continuously added at a rate of 0.0302 mmol/min (a n-hexane solution containing 5.2 ppm of water), and the polymer solution to which the coupling agent had been added was mixed as a result of passing through the static mixer to cause a coupling reaction. Here, the time up to the addition of the coupling agent to the polymer solution flown out from the outlet of the reactor was 4.8 min, the temperature was 68 °C, and the difference between the temperature in the polymerization process and the temperature up to the addition of the modifying agent was 7 °C. To the polymer solution in which the coupling reaction had been caused, an antioxidant (BHT) was continuously added at a rate of 0.055 g/min (a n-hexane solution) in an amount of 0.2 g per 100 g of the resultant polymer to complete the coupling reaction. At the same time as the addition of the antioxidant, an oil (JOMO Process NC140 produced by JX Nippon Mining & Metals Corporation) was continuously added in an amount of 10.0 g with respect to 100 g of the resultant polymer, and the resultant was mixed by the static mixer. The solvent was removed by steam stripping to obtain a sample of modified SBR.

In the modified SBR, the "degree of branching" corresponding to the number of branches assumed from the number of functional groups of the coupling agent and the amount of the coupling agent added is 8 (which can be confirmed also from the value of the shrinkage factor), and the "number of SiOR residues" corresponding to the value obtained by subtracting the number of SiORs reduced by the reaction from the total number of SiORs that one molecule of the coupling agent has is 4. Further, the glass transition temperature of the modified SBR is -24 °C.

<Evaluation>

The wet grip performance and the fuel efficiency of the obtained vulcanized rubber test pieces were evaluated with the following methods.

(1) Wet grip performance

The loss tangent (tanδ) of the test piece was measured using a viscoelasticity measuring device (manufactured by Rheometrics) under conditions of a temperature of -5 °C, a strain of 1 %, and a frequency of 52 Hz. The evaluation results were expressed as an index with the tanδ of Comparative Example 1 being 100. A larger index indicates smaller tanδ, meaning better fuel efficiency.

(2) Fuel efficiency

The loss tangent (tanδ) of the test piece was measured using a viscoelasticity measuring device (manufactured by Rheometrics) under conditions of a temperature of 50 °C, a strain of 1 %, and a frequency of 52 Hz, and the reciprocal of the measured value was calculated. The evaluation results were expressed as an index with the reciprocal of the tanδ of Comparative Example 1 being 100. A larger index indicates smaller tanδ, meaning better fuel efficiency.

(3) Wear resistance

A sandpaper was attached to a polishing ring using a Lambourn abrasion tester manufactured by Ueshima Seisakusho Co., Ltd., and the amounts of wear of the test piece at a slip rate of 5 %, 7 %, 10 %, 12 %, and 15 % were measured at room temperature according to JIS K 6264-2:2005. At each slip rate, an index was calculated using the following expression with the reciprocal of the amount of wear of Comparative Example 1 being 100, and the average value of the obtained indexes was calculated. A larger index indicates a smaller amount of wear, meaning better wear resistance.

$$\text{Wear resistance index} = \{(\text{amount of wear of test piece of Comparative Example 1})/(\text{amount of wear of each test piece})\} \times 100$$

(9) Overall evaluation

A value obtained by combining the evaluation values (indexes) of the wet grip performance, fuel efficiency and wear resistance was used as an index for overall evaluation.

A larger index for overall evaluation indicates better overall evaluation.

[Table 1]

| | | Comparative Example 1 | Example 1 | Example 2 |
|---|---|---|---|---|
| Composition | Both-terminal-modified SBR *1 | 21 | 21 | 42 |
| | Unmodified SBR *2 | - | 110 | 83 |
| | Modified SBR *3 | 88 | - | - |
| | Silica *4 | 80 | 80 | 80 |
| | Carbon black *5 | 5 | 5 | 5 |
| | Silane coupling agent A *6 | 4.8 | 4.8 | 4.8 |
| | Silane coupling agent B *7 | 7.2 | 7.2 | 7.2 |
| | Oil *8 | 22 | - | - |
| | Hydrogenated C5-based resin *9 | 10 | 10 | 10 |
| | Stearic acid | 1 | 1 | 1 |
| | Wax *10 | 1.5 | 1.5 | 1.5 |
| | Antioxidant *11 | 2.72 | 2.72 | 2.72 |
| | Vulcanization accelerator *12 | 4 | 3.5 | 4 |
| | Sulfur | 2 | 2 | 2 |
| Evaluation | Wet grip performance | 100 | 100 | 81 |
| | Fuel efficiency | 100 | 104 | 115 |
| | Wear resistance | 100 | 104 | 148 |
| | Overall evaluation | 300 | 308 | 344 |

*1 Both-terminal-modified SBR: the both-terminal-modified SBR obtained as above described (preparation of both-terminal-modified SBR), and the blending amount includes 5 parts by mass of oil added to 100 parts by mass of the both-terminal-modified SBR
*2 Unmodified SBR: manufactured by JSR Corporation, product name "HP755B", glass transition temperature: -19 °C, and the blending amount includes 37.5 parts by mass of oil added to 100 parts by mass of SBR
*3 Modified SBR: the modified SBR obtained as above described (preparation of modified SBR), and the blending amount includes 10 parts by mass of oil added to 100 parts by mass of the modified SBR
*4 Filler: silica, manufactured by TOSOH SILICA CORPORATION, product name "Nipsil AQ"
*5 Carbon black: manufactured by Asahi Carbon Co., Ltd., product name "#80"
*6 Silane coupling agent A: manufactured by EVONIK, product name "Si 69"
*7 Silane coupling agent B: manufactured by EVONIK, product name "Si 363"
*8 Oil: manufactured by Idemitsu Kosan Co., Ltd., product name "Diana Process NH-70S"
*9 Hydrogenated Cs-based resin: manufactured by Eastman, product name "registered trademark Impera E1780", softening point = 130 °C, weight-average molecular weight (Mw) = 909 g/mol
*10 Wax: "SUNTIGHT A" manufactured by Seiko Chemical Co.,Ltd.
*11 Antioxidant: a plurality of antioxidants containing 6PPD, and the blending amount is the total amount
*12 Vulcanization accelerator: a plurality of vulcanization accelerators containing DPG, CBS and MBTS, and the blending amount is the total amount

From the results listed in Table 1, it is understood that, in the rubber composition of the examples according to the present disclosure, the overall evaluation of the wet grip performance, fuel efficiency and wear resistance is better than that of the comparative example, and these effects are highly balanced in the examples according to the present

disclosure.

INDUSTRIAL APPLICABILITY

According to the present disclosure, it is possible to provide a rubber composition for tire capable of highly balancing wet grip performance with fuel efficiency and wear resistance in a tire, and a tread rubber containing the rubber composition.

Further, according to the present disclosure, it is possible to provide a tire in which wet grip performance is highly balanced with fuel efficiency and wear resistance.

## Claims

1. A rubber composition for tire, which is a rubber composition comprising a rubber component and a filler containing at least silica, wherein
the rubber component comprises a styrene-butadiene rubber (A) having a glass transition temperature of -50 °C or lower, which is obtained by modifying a compound represented by the formula (1) with a modifying agent, and an unmodified styrene-butadiene rubber (B) whose glass transition temperature is 30 °C or more higher than that of the styrene-butadiene rubber (A), where

[Chem. 1]

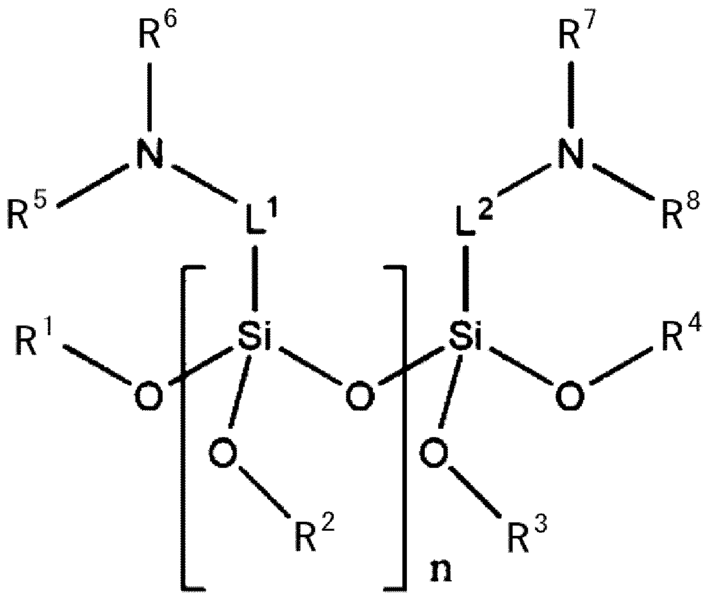

· · · · (1)

in the formula, $R^1$ to $R^8$ are each independently an alkyl group having 1 to 20 carbon atoms; $L^1$ and $L^2$ are each independently an alkylene group having 1 to 20 carbon atoms; and n is an integer of 2 to 4.

2. The rubber composition for tire according to claim 1, wherein a content ratio of the styrene-butadiene rubber (A) in the rubber component is 15 % by mass to 60 % by mass.

3. The rubber composition for tire according to claim 1 or 2, wherein a content ratio of the styrene-butadiene rubber (B) in the rubber component is 30 % by mass to 90 % by mass.

4. The rubber composition for tire according to any one of claims 1 to 3, further comprising a resin in an amount of 1 part by mass to 50 parts by mass with respect to 100 parts by mass of the rubber component.

5. The rubber composition for tire according to any one of claims 1 to 4, wherein the filler further comprises carbon black, and
a content ratio of silica in the total amount of the silica and the carbon black is 50 % by mass or more and less than

100 % by mass.

6. The rubber composition for tire according to any one of claims 1 to 5, wherein the modifying agent is any one of the formulas (1-1) to (1-5).

[Chem. 2]

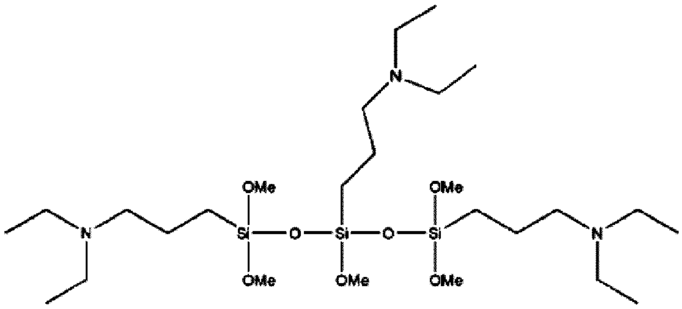

・・・・・(1-1)

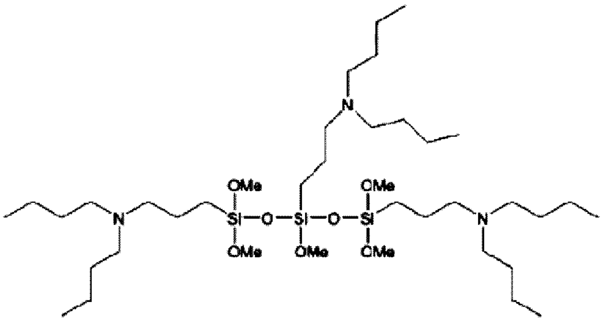

・・・・・(1-2)

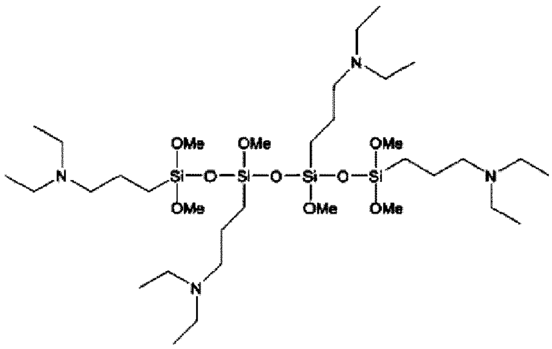

・・・・・(1-3)

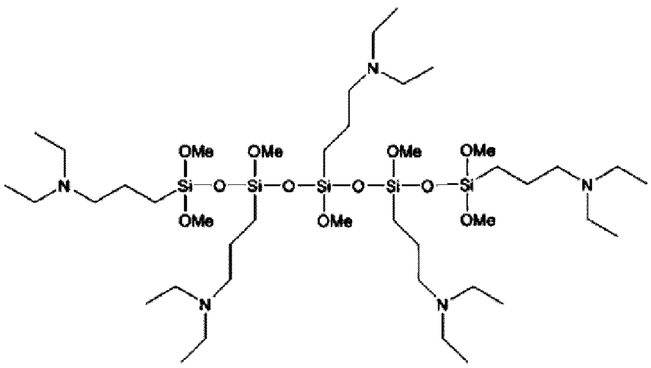

・・・・・(1-4)

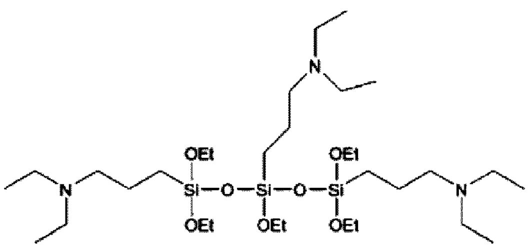

・・・・・(1-5)

**7.** The rubber composition for tire according to any one of claims 1 to 6, wherein the styrene-butadiene rubber (A) is further modified with a modifying agent containing a compound represented by the formula (2), where

[Chem. 3]

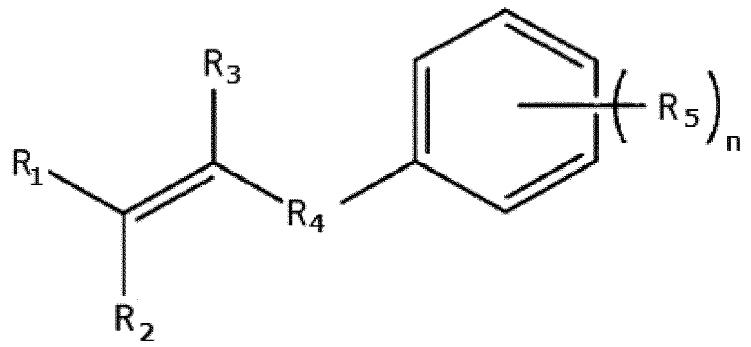

· · · · (2)

in the formula (2), $R_1$ to $R_3$ are each independently hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms, a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, $R_4$ is a single bond; an alkylene group having 1 to 20 carbon atoms substituted or unsubstituted with a substituent; a cycloalkylene group having 5 to 20 carbon atoms substituted or unsubstituted with a substituent; or an arylene group having 5 to 20 carbon atoms substituted or unsubstituted with a substituent, where the substituent is an alkyl group having 1 to 10 carbon atoms, a cycloalkyl group having 5 to 10 carbon atoms, or an aryl group having 6 to 20 carbon atoms, and $R_5$ is an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms; or a functional group represented by the following chemical formula (2a) or chemical formula (2b), where n is an integer of 1 to 5, at least one $R_5$ is a functional group represented by the following chemical formula (2a) or chemical formula (2b), and when n is an integer of 2 to 5, a plurality of $R_5$s may be the same or different from each other,

[Chem. 4]

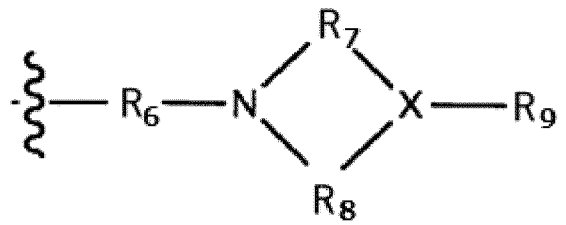

· · · · (2a)

in the formula (2a), $R_6$ is an alkylene group having 1 to 20 carbon atoms substituted or unsubstituted with a substituent; a cycloalkylene group having 5 to 20 carbon atoms substituted or unsubstituted with a substituent; or an arylene group having 6 to 20 carbon atoms substituted or unsubstituted with a substituent, where the substituent is an alkyl group having 1 to 10 carbon atoms, a cycloalkyl group having 5 to 10 carbon atoms, or an aryl group having 6 to 20 carbon atoms, $R_7$ and $R_8$ are each independently an alkyl group having 1 to 10 carbon atoms, a cycloalkyl group having 5 to 10 carbon atoms, or an alkylene group having 1 to 20 carbon atoms substituted or unsubstituted with an aryl group having 6 to 20 carbon atoms, $R_9$ is hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, X is a N, O or S atom, and when X is O or S, there is no R9, and

[Chem. 5]

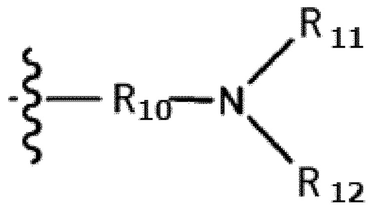

· · · · (2b)

in the formula (2b), $R_{10}$ is an alkylene group having 1 to 20 carbon atoms substituted or unsubstituted with a substituent; a cycloalkylene group having 5 to 20 carbon atoms substituted or unsubstituted with a substituent; or an arylene group having 6 to 20 carbon atoms substituted or unsubstituted with a substituent, where the substituent is an alkyl group having 1 to 10 carbon atoms, a cycloalkyl group having 5 to 10 carbon atoms, or an aryl group having 6 to 20 carbon atoms, and $R_{11}$ and $R_{12}$ are each independently an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

**8.** A tread rubber, comprising the rubber composition for tire according to any one of claims 1 to 7.

**9.** A tire, comprising the tread rubber according to claim 8.

**INTERNATIONAL SEARCH REPORT**

International application No.
**PCT/JP2022/016939**

**A. CLASSIFICATION OF SUBJECT MATTER**

***C08L 9/06***(2006.01)i; ***B60C 1/00***(2006.01)i; ***C08C 19/25***(2006.01)i; ***C08K 3/013***(2018.01)i; ***C08K 3/04***(2006.01)i; ***C08K 3/36***(2006.01)i; ***C08L 15/00***(2006.01)i; ***C08L 101/00***(2006.01)i
FI: C08L9/06; C08K3/013; C08K3/36; C08L15/00; C08L101/00; C08K3/04; C08C19/25; B60C1/00 A

According to International Patent Classification (IPC) or to both national classification and IPC

**B. FIELDS SEARCHED**

Minimum documentation searched (classification system followed by classification symbols)

C08L9/06; B60C1/00; C08C19/25; C08K3/013; C08K3/04; C08K3/36; C08L15/00; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2020-504210 A (LG CHEM, LTD.) 06 February 2020 (2020-02-06) | 1-9 |
| A | WO 2009/113546 A1 (BRIDGESTONE CORP.) 17 September 2009 (2009-09-17) | 1-9 |
| A | WO 2008/050851 A1 (JSR CORP.) 02 May 2008 (2008-05-02) | 1-9 |
| A | JP 2019-515073 A (LG CHEM, LTD.) 06 June 2019 (2019-06-06) | 1-9 |
| A | WO 2013/031599 A1 (ASAHI KASEI CHEMICALS CORP.) 07 March 2013 (2013-03-07) | 1-9 |
| A | JP 2018-534401 A (LG CHEM, LTD.) 22 November 2018 (2018-11-22) | 1-9 |
| P, A | WO 2021/106351 A1 (BRIDGESTONE CORP.) 03 June 2021 (2021-06-03) | 1-9 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 June 2022** | **28 June 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/016939**

| Patent document cited in search report | Publication date (day/month/year) | Patent family member(s) | Publication date (day/month/year) |
|---|---|---|---|
| JP 2020-504210 A | 06 February 2020 | US 2019/0233547 A1 | |
| | | WO 2018/128288 A1 | |
| | | EP 3508508 A1 | |
| | | CN 109923136 A | |
| | | KR 10-1865796 B1 | |
| WO 2009/113546 A1 | 17 September 2009 | US 2011/0146877 A1 | |
| | | CN 102026826 A | |
| | | EP 2266819 A1 | |
| WO 2008/050851 A1 | 02 May 2008 | US 2010/0016500 A1 | |
| | | EP 2085419 A1 | |
| | | KR 10-2009-0086072 A | |
| | | CN 101553522 A | |
| JP 2019-515073 A | 06 June 2019 | US 2019/0048115 A1 | |
| | | WO 2017/217720 A1 | |
| | | EP 3473654 A1 | |
| | | KR 10-2017-0142492 A | |
| | | CN 108699179 A | |
| WO 2013/031599 A1 | 07 March 2013 | US 2014/0371383 A1 | |
| | | EP 2749575 A1 | |
| | | CN 103764682 A | |
| | | KR 10-2014-0028133 A | |
| | | TW 201313745 A | |
| JP 2018-534401 A | 22 November 2018 | US 2018/0258194 A1 | |
| | | WO 2017/188641 A2 | |
| | | EP 3333199 A2 | |
| | | KR 10-2017-0121694 A | |
| | | CN 108350118 A | |
| WO 2021/106351 A1 | 03 June 2021 | JP 2021-85029 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015079703 A